# EUROPÄISCHE PATENTSCHRIFT

(11) **EP 0 860 574 B1**
(45) Veröffentlichungstag und Bekanntmachung des Hinweises auf die Patenterteilung: **20.07.2005**
(21) Anmeldenummer: 98100132.4
(22) Anmeldetag: 07.01.1998
(51) Int. Cl.: E06B 3/48, E06B 9/13

(54) **Sektionaltor**
Sectional door
Porte sectionnelle

(30) Priorität: 21.02.1997 DE 29703077 U
(43) Veröffentlichungstag der Anmeldung: 26.08.1998
(73) Patentinhaber: WIHAG Nutzfahrzeugtechnik GmbH & Co. KG, 33647 Bielefeld (DE)
(72) Erfinder: Rauenbusch, Gerd, 79664 Wehr (DE)

(56) Entgegenhaltungen:
- EP-A- 0 541 159
- DE-A- 2 421 244
- DE-A- 2 608 728
- DE-U- 9 403 833
- DE-U- 29 615 538
- US-A- 3 017 218
- US-A- 3 084 403
- US-A- 3 662 410
- US-A- 4 194 313

## Beschreibung

Die Erfindung betrifft ein Sektionaltor, insbesondere ein Nutzfahrzeug-Sektionaltor, mit einem plattenförmigen Bauelement, welches an wenigstens einer Seite mit parallel und im Abstand zueinander verlaufenden, die Dicke wesentlich herabsetzenden Vertiefungen versehen ist, und welches im wesentlichen aus miteinander verbundenen Lamellenkörpern besteht, die als mehrlagige Kunststoffstreifen ausgebildet oder als Schichtkörper aus unterschiedlichen Materiallagern gefertigt sind.

Das in Rede stehende Sektionaltor wird besonders für Nutzfahrzeuge verwendet. Durch die gelenkig miteinander verbundenen Lamellenkörper besteht die Möglichkeit, dass das plattenförmige Bauelement beim Verfahren umgelenkt oder notfalls im Bedarfsfall zu einer Rolle aufgewickelt werden kann.

Die bisher verwendeten bekannten plattenförmigen Bauelemente werden insbesondere aus Stahl, Aluminium oder Kunststoff so gefertigt, dass sie zumindest in Querrichtung biegesteif sind. Die einzelnen Lamellenkörper müssen beweglich miteinander verbunden sein, damit das plattenförmige Bauelement, je nach Verwendungszweck umgelenkt oder aufgewickelt werden kann. Diese Verbindung der einzelnen Lamellenkörper erfolgt entweder durch Scharniere oder durch eine derartige Profilierung der Seitenränder der einzelnen Lamellenkörper, dass die Profilierungen beweglich ineinander greifen.

Nachteilig ist bei den bekannten Ausführungen, dass die einzelnen Lamellenkörper eines plattenförmigen Bauelementes durch Verformung mit entsprechenden Werkzeugen oder, sofern es sich um Kunststoffprofile handelt, dass diese extrudiert werden müssen. Selbst wenn man auf eine scharnierlose Ausführung geht, sind auch die Montagekosten relativ hoch. Sofern die einzelnen Lamellenkörper aus Metall bestehen, ist das Gewicht verhältnismäßig hoch. Dadurch wird es beispielsweise bei Rolltoren notwendig, dass beim Öffnen des Tores ein Hilfsantrieb, beispielsweise eine Federwelle notwendig wird, deren Federn vorgespannt sind. Sofern ein elektromotorischer Antrieb zum Öffnen und Schließen verwendet wird, muss die Antriebsleistung entsprechend hoch sein.

Aus der US 3,017,218 ist ein Abdeckelement für Container oder LKW bekannt, welches zwei äußere Decklagen aufweist, die durch metallische Verstärkungsprofile auf Abstand gehalten werden. Der Zwischenraum ist mit einem Kunststoffinaterial aufgeschäumt. An einer Seite ist dieses Abdeckelement mit parallel und im Abstand zueinander verlaufenden Vertiefungen versehen, damit es längs einer vorgegebenen Führung verfahren werden kann. Diese Führung verläuft im mittleren Bereich in einem Bogen mit einem relativ großen Radius, damit das Abdeckelement hindurchgeschoben werden kann. Dieses Abdeckelement wird beim Durchlaufen des Bogens entsprechend gebogen. Dies wird durch die Vertiefungen ermöglicht. Die Führung erfolgt durch Rollen, die an den metallischen Verstärkungsprofilen angebracht sind. Dieses Abdeckelement ist jedoch nicht als Sektionaltor verwendbar, da zum Verfahren eine enorme Kraft notwendig ist, da die zwischen den Vertiefungen liegenden Bereiche gebogen werden müssen.

Aus der DE 296 15 538 U1 ist ein Rolltorelement bekannt, welches auch zum Verschließen des Kastenaufbaus einer Fahrzeuges verwendbar ist. Das Rolltorelement enthält ein Traggewebe aus einem Kunststoff, welches an beiden Seiten mit elastischen Zahnstangenelementen versehen ist, die in Zahnscheiben eingreifen, die drehbar gelagert sind. Das Traggewebe ist bezüglich dieser Drehachse biegeelastisch und bezüglich einer rechtwinklig dazu stehenden Achse biegesteif. Das Traggewebe ist ein einschichtiges Polyestergewebe. Dieses Rolltorelement ist konstruktiv aufwendig und hat sich deshalb in der Praxis nicht durchgesetzt.

Aus der US 4,194,313 ist eine frei aufstellbare Präsentationswand bekannt, die aus einzelnen gelenkig miteinander verbundenen Panellen besteht. Die gelenkige Verbindung der einzelnen Panelle erfolgt durch scharnierartige Verbindungselemente oder durch Klettverschlüsse. Die gelenkigen Verbindungen der Panelle sind so ausgelegt, dass die Präsentationswand zusammengeklappt werden kann, so dass sie platzsparend bei Nichtgebrauch aufgestellt werden kann. Die oberen und unteren Ränder der einzelnen Panelle sind in Profilschienen eingefasst, damit die Kanten geschützt werden. Zusätzlich sind auch die äußeren Ränder der äußeren Panelle in Profilschienen eingesetzt, damit auch diese Kanten geschützt sind. Aus dieser Literaturstelle sind zwar gelenkig miteinander verbundene Panelle bekannt, jedoch sind in technisch aufwendiger Weise für die gelenkigen Verbindungen der Panelle zusätzliche, scharnierartig gestaltete Elemente notwendig. Eine kostengünstige Lösung für eine Füllungsplatte ist dieser Literaturstelle nicht zu entnehmen.

Der Erfindung liegt die Aufgabe zugrunde, ein plattenförmiges Bauelement der eingangs näher beschriebenen Art so auszubilden, dass auf separate Scharniere oder auf ineinander steckbare Randprofilierungen der Lamellenkörper verzichtet werden kann.

Die gestellte Aufgabe wird gelöst, indem das plattenförmige Bauelement aus einer aus mindestens drei Lagen bestehenden Sandwichplatte hergestellt ist, dass die Lamellen biegesteif ausgebildet und gelenkig miteinander verbunden sind, wobei die gelenkigen Verbindungen aus mit den Lamellenkörpern oder mit mindestens einer Lage der Lamellenkörper einstückig sowie biegeelastisch ausgebildeten Streifen bestehen, dass die biegeelastischen Streifen durch an wenigstens einer Seite der Sandwichplatte vorgesehene, parallel und im Abstand zueinander verlaufende Vertiefungen gebildet sind, und dass die Dicken der äußeren Lagen wesentlich geringer sind als die Dicke der einen Kern bildenden mittleren Lage.

Im Gegensatz zu den bisher bekannten Ausführungen der in Rede stehenden plattenförmigen Bauelemente können nunmehr handelsübliche, in größeren Stückzahlen hergestellte Kunststoffplatten oder plattenförmige Schichtkörper zur Hersteltung verwendet werden. Da diese aus Kunststoff bestehen, lassen sie sich äußerst gut bearbeiten. Je nach Art des Kunststoffes kann die Verformung zur Bildung der biegeelastischen Streifen im erwärmten Zustand spanlos oder auch durch eine spangebende Bearbeitung erfolgen. Durch die Verwendung von Kunststoffplatten wird nunmehr ein einstückiges plattenförmiges Bauelement geschaffen, wobei es sogar denkbar ist, dass bei einer entsprechenden Größe der plattenförmigen Bauelemente mehrere Elemente zusammengefügt werden, wenn beispielsweise die Größe des plattenförmigen Bauelementes das handelsübliche Maß der Kunststoffplatten übersteigt. Die Beweglichkeit der Lamellen wird durch die zwischen den einzelnen Lamellen liegenden biegeelastischen Streifen geschaffen, die sinngemäß auch als Filmscharniere angesehen werden können und nach Art der verwendeten Kunststoffplatten gestaltet sind.

Das erfindungsgemäße plattenförmige Bauelement besteht deshalb wechselweise aus den biegesteifen und biegeelastischen Bereichen, so daß das plattenförmige Bauelement zu einer Rolle aufgewickelt oder umgelenkt werden kann, je nach Verwendungszweck. Durch die verwendeten Materialien ist das Gewicht der Füllungsplatte gegenüber den bisher bekannten Ausführungen deutlich verringert worden. Dadurch läßt sich beispielsweise ein Sektionaltor mit wesentlich geringerer Kraft öffnen, so daß ggfs. die verwendeten elektromotorischen Antriebe mit einer äußerst geringen Leistung betrieben werden können.

Die biegeelastischen Streifen lassen sich in einfachster Weise herstellen, wenn das plattenförmige Bauelement aus einem thermoplastischen Kunststoff gefertigt wird. Es bietet sich dann an, die biegeelastischen Streifen durch Verformung der Kunststoffplatte durch Wärme und Druck herzustellen. Mittels eines geeigneten Wekzeuges lassen sich die biegeelastischen Streifen auch spangebend herstellen. Die Bearbeitung eines thermoplastischen Werkstoffes erlaubt dabei hohe Schnittgeschwindigkeiten. Die biegeelastischen Streifen werden in beiden Fällen dadurch gebildet, daß an wenigstens einer Seite Vertiefungen hergestellt werden, so daß die Dicke der biegeelastischen Streifen deutlich geringer ist als die der Lamellenkörper. Bei einer ersten Ausführungsform wird das plattenförmige Bauelement aus einer aus mindestens drei Lagen bestehenden Sandwichplatte hergestellt, die an wenigstens einer Seite mit parallel und im Abstand zueinander verlaufenden, die Dicke wesentlich verringernden Vertiefungen derart versehen ist, daß diese Bereiche biegeelastisch werden. Bei dieser Ausführung ist vorgesehen, daß das plattenförmige Bauelement aus drei Lagen besteht, daß die Dicken der beiden äußeren Lagen wesentlich geringer sind als die einen Kern bildende mittlere Lage. Dadurch wird nicht nur eine ausreichende Steifigkeit des plattenförmigen Bauelementes erreicht, sondern darüber hinaus auch noch eine gute Wärmedämmung.

Besonders vorteilhaft ist es, wenn der Kern aus einem Material mit relativ geringer Dichte, wie z. B. einem wabenförmigen Material, einem Schaum, einem Fasermaterial oder dergleichen besteht. Dadurch wird nicht nur das Gewicht noch zusätzlich verringert, sondern das Einbringen der Vertiefungen zur Bildung der biegeelastischen Streifen ist besonders einfach. Es ist dann vorgesehen, daß der Kern und die Deckschichten aus einem unter Wärme- und Druckeinwirkung verformbaren Material bestehen. Dadurch läßt sich das plattenförmige Bauelement spanlos mit einem geeigneten Werkzeug in einem Arbeitsgang aus der Sandwichplatte herstellen. Als Materialien für die beiden äußeren Deckschichten und für den Kern kommen die üblichen Materialien, beispielsweise Polypropylen, in Frage. Das plattenförmige Bauelement ist dann auch recycelbar.

Die Vertiefungen sind dann zweckmäßigerweise so gewählt, daß die beiden äußeren Lagen miteinander verbunden sind. Diese Verbindung erfolgt vorzugsweise durch Verschweißen, da dann unmittelbar nach dem Herstellen der Vertiefungen durch einen Preßvorgang die Verschweißung vorgenommen werden kann. Die Vertiefungen werden so ausgebildet, daß sich die beiden Decklagen berühren, um sie zu verschweißen. Die Vertiefungen sind im Querschnitt vorzugsweise V-förmig, trapezförmig oder auch halbkreisförmig ausgebildet. Die Vertiefungen erweitern sich dann zum Verbindungsbereich der beiden Decklagen zu der Außenseite bzw. zu den Außenseiten. Sofern die Vertiefungen durch Einwirkung von Wärme und Druck hergestellt werden, ergeben sich unabhängig von der jeweiligen Ausführung fugenlose Flächen, obwohl die Beweglichkeit der biegesteifen Lamellenkörper gesichert ist.

Unabhängig von der gewählten Ausführung der thermoplastischen Platten für die Herstellung der plattenförmigen Bauelemente ist vorgesehen, daß die Vertiefungen an einer oder an beiden Seiten vorgesehen sind. Die Vertiefungen müssen jedoch dann gegenüberliegend sein. Vertiefungen an beiden Seiten ergeben den Vorteil, daß die Verformung nicht so stark sein muß, als wenn die Vertiefungen nur an einer Seite liegen. Bei der letztgenannten Ausführung ergibt sich jedoch der Vorteil, daß eine Seite, beispielsweise die Sichtseite, glattflächig ist. Dadurch werden Schmutzablagerungen oder dergleichen vermindert oder erschwert. Die glattflächige Seite ließe sich dann auch leichter reinigen. Um diesen Effekt zu erzielen, ist in weiterer Ausgestaltung auch noch vorgesehen, daß bei einem mehrlagigen Bauelement bzw. bei einem aus einem Schichtkörper gefertigten Bauelement zumindest die die Vertiefungen aufweisende Seite des plattenförmigen Bauelementes, vorzugsweise jedoch auch beide Seiten mit jeweils einer Abdecklage versehen sind.

Bei den zuvor beschriebenen Ausführungen wird als Ausgangsmaterial eine als massiv anzusehende Platte verwendet, selbst wenn der mittlere Kern wabenförmig ausgebildet, aus einem Schaum oder einem Fasermaterial besteht. Es ist jedoch auch denkbar, daß die Ausgangsplatte als Hohlprofil ausgebildet ist, wobei die äußeren Wandungen dann durch Schweißung miteinander verbunden sind. Auch bei einer solchen Ausführung können dann wieder Abdecklagen verwendet werden.

Anhand der beiliegenden Zeichnungen wird die Erfindung noch näher erläutert.

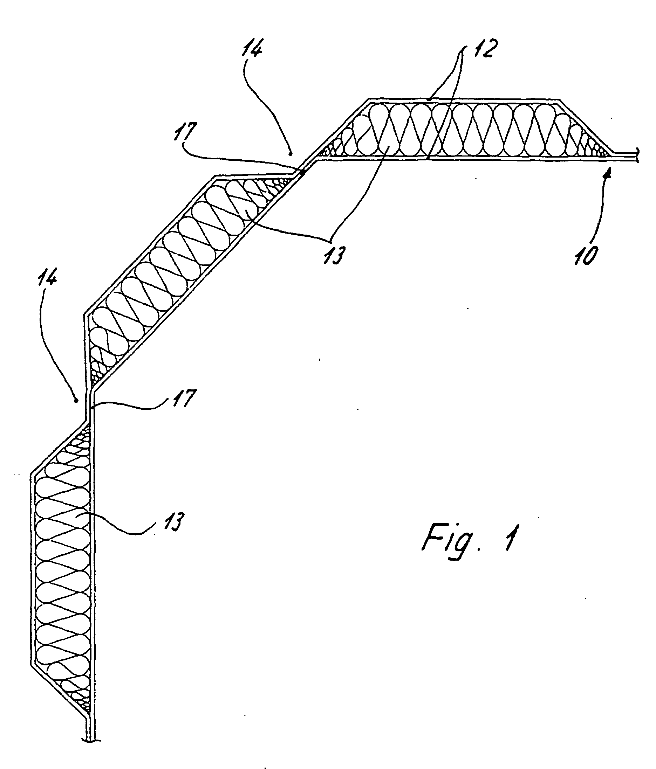

Es zeigen:
- Figur 1: eine Ausführung eines umgelenkten, plattenförmigen Bauelementes in einer Seitenansicht, für das erfindungsgemäße Sektionaltor,
- Figur 2: ein aus einer dreilagigen Sandwichplatte gefertigtes plattenförmiges Bauelement in Schnittdarstellung mit einer ersten Ausbildung der Vertiefungen,
- Figur 3: ein Bauelement nach der Figur 2 in einer zweiten Ausbildung der Vertiefungen,
- Fig. 4 u. 5: aus einer Sandwichplatte hergestellte Bauelemente, die beidseitig mit Abdecklagen versehen sind und bei denen sich die Vertiefungen über die halbe Dicke erstrecken.
Das in den Figuren 1-5 dargestellte plattenförmige Bauelement 10 für ein Sektionaltor ist aus einer Sandwichplatte hergestellt, die aus den beiden äußeren Decklagen 11, 12 und einem Kern 13 bestehen. Die Decklagen 11, 12 sind aus einer Kunststoffolie, beispielsweise aus Polypropylen, gefertigt. Die Dicken der beiden Decklagen 11, 12 sind für Folien relativ groß, in Bezug auf die Gesamtdicke des plattenförmigen Bauelementes 10 jedoch relativ gering. In den dargestellten Ausführungsbeispielen ist ein Bauelement 10 dargestellt, welches aus einem Schichtkörper besteht. Die den Kern 13 bildende mittlere Schicht kann wabenförmig ausgebildet sein. Sie könnte jedoch auch aus einem geschäumten Material oder aus einem Abstandsgewebe hergestellt werden. Bei den Ausführungen gemäß den Figuren 1-3 sind in gleichbleibenden Abständen über die Höhe bzw. Länge des Bauelementes 10 von einer Seite aus sich zur gegenüberliegenden Seite erstreckende Vertiefungen 14 vorgesehen. Die dazwischen liegenden Bereiche bilden biegesteife Lamellenkörper. Wie die Figur 1 zeigt, liegen zwischen den Lamellenkörpern durch die Vertiefungen gebildete biegeelastische Streifen 17, so daß das Bauelement 10 umgelenkt oder aufgewickelt werden kann. Je nach Art des Ausgangsmaterials besteht jeder biegeelastische Streifen aus wenigstens einer Lage der mit mindestens einer Lage des Lamellenkörpers verbunden ist. Bei den Ausführungen gemäß den Figuren 1-3 wird der biegeelastische Streifen durch zwei Lagen gebildet, nämlich durch Bereiche der beiden äußeren Decklagen 11 und 12, die durch Schweißung miteinander verbunden sind.

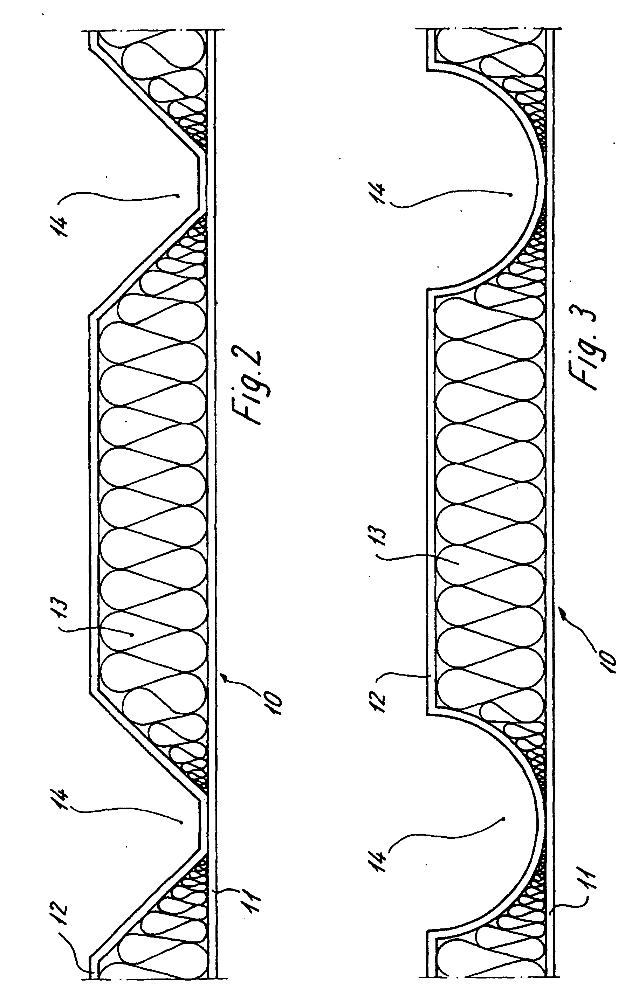

Bei der Ausführung nach der Fig. 2 sind die Vertiefungen trapezförmig und erstrecken sich über die gesamte Höhe des Kernes 13, so daß die Decklage 12 die gegenüberliegende Decklage 11 im Bereich des Grundes der Vertiefung 14 berührt. Bei der Ausführung nach der Fig. 3 sind die Vertiefungen 14 V-förmig oder bogenförmig ausgebildet. In dem Bereich, wo sich bei beiden Ausführungen die Decklagen 11, 12 berühren sind sie durch Schweißung miteinander verbunden.

Es ergibt sich aus den Fig. 2 und 3, daß sich durch die Vertiefungen nach Art eines Filmscharnieres ausgebildete bewegliche Bereiche ergeben, so daß zwei aufeinanderfolgende Lamellen in eine Winkelstellung zueinander bringbar sind. Der maximal mögliche Schwenkbereich richtet sich nach der Ausbildung der Vertiefungen 14.

In nicht dargestellter Weise könnten die Füllungsplatten 10 auch an beiden Seiten mit Vertiefungen versehen werden, die auf gleicher Höhe liegen. Dabei ist es nicht notwendig, daß die Vertiefungen beider Seiten gleich tief sind, um beispielsweise statt einer glatten Außenfläche eine bestimmte Struktur oder ein Dekor zu erzeugen.

Aus den Fig. 2 und 3 ergibt sich ferner, daß die Vertiefungen 14 mit einem geeigneten Werkzeug in einem Arbeitsgang hergestellt werden können, in dem die Bereiche für die Vertiefungen 14 durch Wärme plastifiziert werden. Zur Ausformung der Vertiefungen 14 werden dann entsprechende Stempel oder Druckleisten in die Sandwichplatte eingedrückt. Dabei müssen selbstverständlich die Decklagen 11, 12, bzw. im dargestellten Ausführungsbeispiel die Decklage 12, dehnfähig sein. An den Seitenflanken der Vertiefungen 14 wird der Kern 13 verdichtet.

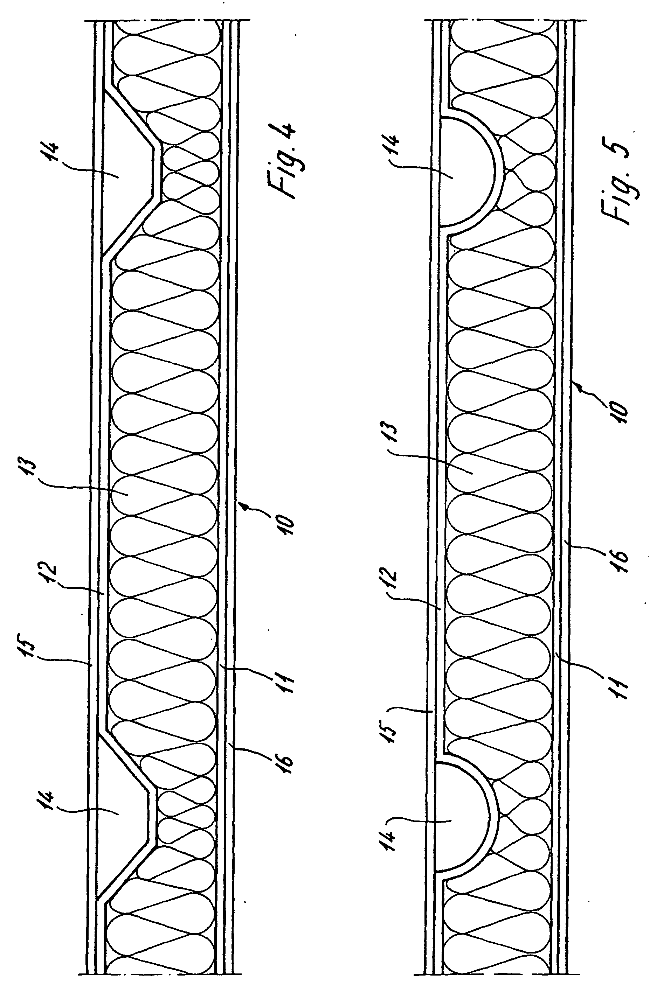

Bei den Ausführungsbeispielen nach den Figuren 4 und 5 erstrecken sich die Vertiefungen 14 von einer Seite aus über die halbe Dicke der Füllungsplatte 10. Bei der Ausführung nach der Figur 4 sind die Vertiefungen 14 wiederum trapezförmig, während sie bei der Ausführung nach der Figur 5 halbkreisförmig sind. Je nach der Materialart für den Kern 13 kann eine solche Tiefe ausreichend sein, um die durch die Vertiefungen 14 gebildeten biegeelastischen Streifen zu erreichen. Die Besonderheit dieser beiden Ausführungen liegt darin, daß die Füllungsplatte 10 an beiden Seiten mit jeweils einer Abdecklage 15, 16 versehen ist. Dadurch werden einerseits die Vertiefungen unsichtbar, andererseits läßt sich das Aussehen der Füllungsplatte dadurch verändern. Die Dicken der beiden Abdecklagen 15, 16 sind bezogen auf die Gesamtdicke der Füllungsplatte 10 wiederum relativ gering. Die Abdecklagen bestehen vorzugsweise auch aus einer Kunststoffolie. Diese Kunststoffolie kann außenseitig auf die beiden Decklagen 11, 12 aufgeklebt werden oder mit anderen Verbindungstechniken festgelegt werden. Es ist selbstverständlich, daß die Abdecklagen flexibel sein müssen, damit die Füllungsplatte umgelegt bzw. aufgerollt werden kann. Im Gegensatz zu den gezeichneten Ausführungen kann die Füllungsplatte 10 auch nur an einer Seite mit einer Abdecklage 15 bzw. 16 ausgestattet werden. Vorzugsweise liegt sie jedoch an der Seite, von der die Vertiefungen 14 ausgehen.

In den dargestellten Ausführungsbeispielen werden die Vertiefungen 14 durch Warmverformung hergestellt, da vorzugsweise die Kunststoffplatte aus einem thermoplastischen Material besteht. Der Kern 13 in den den Vertiefungen 14 zugeordneten Bereichen ist je nach Tiefe der Vertiefungen mehr oder weniger stark verdichtet. Im Gegensatz zu den gezeichneten Ausführungen können jedoch die Vertiefungen 14 auch durch eine mechanische Bearbeitung, beispielsweise durch Fräsen, hergestellt werden.

Bei den dargestellten Ausführungen wird für das plattenförmige Bauelement 10 ein Schichtkörper verwendet. Im Gegensatz dazu kann das Bauelement 10 auch aus einer mehrlagigen Kunststoffplatte hergestellt werden, wenn entsprechend den Darstellungen diese Platte mit Vertiefungen bzw. Ausnehmungen versehen wird, die vorzugsweise durch spangebende Bearbeitung hergestellt werden und die Tiefe dieser Ausnehmungen bzw. Vertiefungen so gewählt wird, daß das verbleibende Material biegeelastisch ist.

## Patentansprüche

1. Sektionaltor, insbesondere Nutzfahrzeug-Sektionaltor, mit einem plattenförmigen Bauelement (10), welches an wenigstens einer Seite mit parallel und im Abstand zueinander verlaufenden, die Dicke wesentlich herabsetzenden Vertiefungen (14) versehen ist, und welches im wesentlichen aus miteinander verbundenen Lamellenkörpern (13) besteht, die als mehrlagige Kunststoffstreifen ausgebildet oder als Schichtkörper aus unterschiedlichen Materiallagen gefertigt sind, **dadurch gekennzeichnet, dass** das plattenförmige Bauelement (10) aus einer aus mindestens drei Lagen (11, 12, 13) bestehenden Sandwichplatte hergestellt ist, und dass die biegesteifen Lamellenkörper (13) gelenkig miteinander verbunden sind, und dass die gelenkigen Verbindungen aus mit den Lamellenkörpern (13) oder mit mindestens einer Lage der Lamellenkörper (13)einstückig sowie biegeelastisch ausgebildeten Streifen bestehen, dass die biegeelastischen Streifen durch an wenigstens einer Seite der Sandwichplatte vorgesehene, parallel und im Abstand zueinander verlaufende Vertiefungen gebildet sind, und dass die Dicken der äußeren Lagen (11, 12) der Sandwichplatte wesentlich geringer sind als die Dicke einer einen Kern bildenden mittleren Lage.

2. Sektionaltor nach Anspruch 1, **dadurch gekennzeichnet, dass** das plattenförmige Bauelement (10) aus einem thermoplastischen Kunststoff gefertigt ist.

3. Sektionaltor nach Anspruch 1, **dadurch gekennzeichnet, dass** das plattenförmige Bauelement (10) aus drei Lagen (11, 12, 13) besteht, und dass die Dicken der beiden äußeren Lagen (11, 12) wesentlich geringer sind als die einen Kern (13) bildende mittlere Lage.

4. Sektionaltor nach Anspruch 3, **dadurch gekennzeichnet, dass** der Kern (13) aus einem Material mit einer relativ geringen Dichte wie z. B. einem wabenförmigen Material, einem Schaum, einem Fasermaterial oder dergleichen besteht.

5. Sektionaltor nach einem der Ansprüche 3 oder 4, **dadurch gekennzeichnet, dass** der Kern (13) und die äußeren Decklagen (11, 12) aus einem unter Wärme- und Druckeinwirkung verformbaren Material bestehen.

6. Sektionaltor nach einem oder mehreren der vorhergehenden Ansprüche 1 bis 5, **dadurch gekennzeichnet, dass** die äußeren Lagen (11, 12) im Bereich der Vertiefungen (14) vorzugsweise durch Schweißung miteinander verbunden sind.

7. Sektionaltor nach einem oder mehreren der vorhergehenden Ansprüche 1 bis 6, **dadurch gekennzeichnet, dass** die Vertiefungen (14) an einer oder an beiden Seiten vorgesehen sind.

8. Sektionaltor nach einem oder mehreren der vorhergehenden Ansprüche 1 bis 7, **dadurch gekennzeichnet, dass** zumindest die die Vertiefungen(14) aufweisende Seite des plattenförmigen Bauelementes (10) vorzugsweise jedoch beide Seiten mit jeweils einer Abdecklage (15, 16) versehen sind.

9. Sektionaltor nach Anspruch 1, **dadurch gekennzeichnet, dass** das plattenförmige Bauelement (10) aus einem Hohlprofil besteht, dessen äußere Wandungen durch Schweißungen miteinander verbunden sind.

## Claims

1. Sectional door, in particular a sectional door for a commercial vehicle, having a plate-shaped structural element (10) which is provided on at least one side with substantially thickness-reducing depressions (14) running parallel to and at a distance from one another, and which essentially comprises interconnected lamellar bodies (13) which are formed as multi-layer plastic strips or are produced as laminated bodies composed of different material layers, **characterized in that** the plate-shaped structural element (10) is produced from a sandwich plate comprising at least three layers (11, 12, 13), and **in that** the flexurally rigid lamellar bodies (13) are interconnected in an articulated manner, and **in that** the articulated connections comprise strips which are formed in one piece with the lamellar bodies (13) or with at least one layer of the lamellar bodies (13) and have a flexurally elastic design, **in that** the flexurally elastic strips are formed by depressions running parallel to and at a distance from one another and provided on at least one side of the sandwich plate, and **in that** the thicknesses of the outer layers (11, 12) of the sandwich plate are substantially smaller than the thickness of a central layer forming a core.

2. Sectional door according to Claim 1, **characterized in that** the plate-shaped structural element (10) is produced from a thermoplastic.

3. Sectional door according to Claim 1, **characterized in that** the plate-shaped structural element (10) comprises three layers (11, 12, 13), and **in that** the thicknesses of the two outer layers (11, 12) are substantially smaller than the central layer forming a core (13).

4. Sectional door according to Claim 3, **characterized in that** the core (13) consists of a material having a relatively low density, such as, for example, a honeycombed material, a foam, a fibre material or the like.

5. Sectional door according to either of Claims 3 and 4, **characterized in that** the core (13) and the outer cover layers (11, 12) consist of a material which can be deformed under the effect of heat and pressure.

6. Sectional door according to one or more of the preceding Claims 1 to 5, **characterized in that** the outer layers (11, 12) are interconnected, preferably by welding, in the region of the depressions (14).

7. Sectional door according to one or more of the preceding Claims 1 to 6, **characterized in that** the depressions (14) are provided on one or on both sides.

8. Sectional door according to one or more of the preceding Claims 1 to 7, **characterized in that** at least that side of the plate-shaped structural element (10) having the depressions (14), but preferably both sides, is or are provided with a respective covering layer (15, 16).

9. Sectional door according to Claim 1, **characterized in that** the plate-shaped structural element (10) comprises a hollow profile whose outer walls are interconnected by welding.

## Revendications

1. Porte à sections, en particulier porte à sections pour véhicule utilitaire, comprenant un composant (10) en forme de panneau, qui est pourvue sur au moins un côté de cavités (14) agencées parallèlement entre elles et à distance et réduisant sensiblement l'épaisseur, et qui comprend essentiellement des corps à lamelles (13) reliés entre eux, qui sont conçus comme des bandes plastique à plusieurs couches ou sont fabriqués sous la forme de stratifié à base de différentes couches de matériau, **caractérisée en ce que** le composant (10) en forme de plaque est fabriqué à partir d'un panneau sandwich comprenant au moins trois couches (11, 12, 13), et **en ce que** les corps à lamelles (13) résistants a la torsion sont reliés de façon articulée entre eux, et **en ce que** les liaisons articulées se composent de bandes conçues d'une seule pièce et élastiques en flexion avec les corps à lamelles (13) ou avec au moins une couche des corps à lamelles (13), **en ce que** les bandes élastiques en flexion sont formées par des cavités prévues sur au moins un côté du panneau sandwich, agencées parallèlement et à distance entre elles, et **en ce que** les épaisseurs des couches extérieures (11, 12) du panneau sandwich sont sensiblement plus faibles que l'épaisseur d'une couche centrale formant un noyau.

2. Porte à sections selon la revendication 1, **caractérisée en ce que** le composant (10) en forme de panneau est fabriqué à partir d'un plastique thermoplastique.

3. Porte à sections selon la revendication 1, **caractérisée en ce que** le composant (10) en forme de panneau se compose de trois couches (11, 12, 13), et **en ce que** les épaisseurs des deux couches extérieures (11. 12) sont sensiblement plus faibles que la couche centrale formant un noyau (13).

4. Porte à sections selon la revendication 3, **caractérisée en ce que** le noyau (13) est à base d'un matériau avec une densité relativement faible, comme par exemple un matériau à alvéoles, une mousse, un matériau fibreux ou similaire.

5. Porte à sections selon l'une quelconque des revendications 3 ou 4, **caractérisée en ce que** le noyau (13) et les couches de revêtement (11, 12) extérieures sont à base d'un matériau déformable sous l'effet de la chaleur et de la pression.

6. Porte à sections selon l'une quelconque des revendications 1 à 5 précédentes, **caractérisée en ce que** les couches extérieures (11, 12) sont reliées entre elles dans la zone des cavités (14) de préférence par soudage.

7. Porte à sections selon l'une quelconque ou plusieurs des revendications précédentes 1 à 6, **caractérisée en ce que** les cavités (14) sont prévues sur un ou sur les deux côtés.

8. Porte à sections selon l'une quelconque ou plusieurs des revendications précédentes 1 à 7, **caractérisée en ce que** au moins le côté, présentant les cavités (14), du composant (10) en forme de panneau, mais de préférence les deux côtés sont pourvus chacun d'une couche de recouvrement (15. 16).

9. Porte à sections selon la revendication 1, **caractérisée en ce que** le composant (10) en forme de panneau se compose d'un profilé creux, dont les parois extérieures sont reliées entre elles par des soudages.
